(19) Europäisches Patentamt
European Patent Office
Office européen des brevets

(11) EP 2 786 825 A2

(12) **EUROPEAN PATENT APPLICATION**

(43) Date of publication:
08.10.2014 Bulletin 2014/41

(51) Int Cl.:
*B23H 7/06* (2006.01)    *B23H 7/10* (2006.01)

(21) Application number: 14163098.8

(22) Date of filing: 01.04.2014

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: 02.04.2013  JP 2013076859

(71) Applicant: FANUC CORPORATION
**Oshino-mura
Minamitsuru-gun
Yamanashi 401-0597 (JP)**

(72) Inventor: **KASAI, Hirotsugu
Minamitsuru-gun,, Yamanashi 401-0597 (JP)**

(74) Representative: **Ward, James Norman
Haseltine Lake LLP
Lincoln House, 5th Floor
300 High Holborn
London WC1V 7JH (GB)**

(54)    **Wire electric discharge machine having wire electrode tension control function**

(57)    In a taper machining using a wire electric discharge machine, a difference between a target tension value and an actual tension value of a wire electrode is fed back to a controller to determine input current values to a wire electrode feed motor and a wire electrode deliver motor, thereby adjusting the tension value of the wire electrode. When the taper angle of the wire electrode exceeds a given value, the control gain of the tension of the wire electrode for determining the input current value to the motor is lowered to prevent the wire electrode from oscillating.

FIG. 1

**Description**

BACKGROUND OF THE INVENTION

1. Field of the Invention

The present invention relates to a wire electric discharge machine and, in particular, to a wire electric discharge machine having a wire electrode tension control function that prevents the wire electrode from oscillating in taper machining.

2. Description of the Related Art

In a wire electric discharge machine, a wire electrode is wound around a wire bobbin so as to be unreeled from the wire bobbin through a predetermined wire pathway at a predetermined speed and tension. A wire electric discharge machining is a process in which a wire electrode between an upper wire guide and a lower wire guide with a predetermined tension moves relatively to a workpiece. The wire electrode between the upper wire guide and the lower wire guide faces the workpiece with a small gap held therebetween. The process is performed by electric discharge repeatedly occurring by application of voltage pulses with quiescent times while the gap is filled with machining fluid.

The variation in the tension of the wire electrode in the machining without control for the maintenance of constant tension causes streaks of the machining surface, reduction in accuracy of dimension, reduction in machining accuracy, and a break of the wire electrode.

To solve the problem, Japanese Patent Application Laid-Open No. 5-312657 discloses a method for controlling the tension of a wire electrode moving between an upper guide and a lower guide accurately and stably with a high response rate by increasing the detection accuracy of the variation in the tension of the wire electrode by using an optical wire tension measuring device to detect the tension of the wire electrode with a high responsiveness.

However, constantly controlling the wire tension with a high response rate in the above-mentioned method causes a disadvantage of the reduction in machining accuracy if a taper angle exceeds a given value in case where a taper machining is performed with the relative position of the upper wire guide shifted with respect to the lower wire guide. This is because such a taper angle that exceeds the given value causes the wire electrode to touch the upper and lower wire guides in a different manner, as a result, the wire electrode strongly touches the upper and lower wire guides, thereby oscillating the wire electrode.

Japanese Patent Application Laid-Open No. 10-309631 discloses a method for reducing the variation in tension of wire electrodes in case where the wire electrodes to be used vary in type and diameter. In this method, a compensation signal obtained from the difference between the tension detection signal from the wire electrode and the tension setting signal is added to the speed instruction signal through a filter, and such an added speed instruction is output to perform tension control of the wire electrodes, thereby reducing the variation in tension of the wire electrodes. However, it is difficult in this method to prevent the wire electrodes from oscillating during taper machining.

Japanese Patent Application Laid-Open No. 11-254240 discloses a method for controlling the tension of a wire electrode using a tension control device for the wire electrode when movement of the movable axes (X, Y, Z, U, and V axes) in the wire electric discharge machine increases or decreases the travel length along the pathway of the wire electrode, and a method for determining and adjusting a filter for a tension control circuit of the wire electrode.

However, it is difficult in the aforementioned methods to prevent the wire electrode from oscillating that is caused when the way the wire electrode touches the wire guides changes and, as a result, strength with which the wire electrode touches the wire guides changes. This has an effect on the machining accuracy. Furthermore, if a travel length along the pathway of a wire electrode is the same, it is probable that the same tension control method or the same method for determining and adjusting the filter for the tension control circuit of the wire electrode may be used, although the taper angle varies as the thickness of the workpieces varies. Japanese Patent Application Laid-Open No. 11-254240, mentioned above, does not disclose a method for preventing the wire electrode from oscillating due to the possible change of the way the wire electrode touches the wire guides or due to the possible variation in strength with which the wire electrode touches the wire guides.

SUMMARY OF THE INVENTION

In view of the problems in the prior art, an objective of the present invention is to provide a wire electric discharge machine having a wire electrode tension control function that prevents the wire electrode from oscillating in taper machining.

A wire electric discharge machine having a wire electrode tension control function according to the present invention includes: a motor that feeds a wire electrode to a workpiece; a tension detection unit that detects a tension of the wire electrode; a controller that controls the tension of the wire electrode; upper and lower wire guides that hold the wire electrode above and below the workpiece; and upper and lower wire guide units that move the upper and lower wire guides to incline the wire electrode. And the wire electric discharge machine performs machining of the workpiece by inclining the wire electrode and relatively moving the workpiece and the wire electrode. The wire electric discharge machine further includes: a tension control gain storage unit that stores control gains of the tension of the wire electrode in association with inclination angles of the wire electrode; an inclination angle obtaining unit that obtains the inclination angle of the wire electrode; and a tension control gain setting unit that reads the tension control gain corresponding to the obtained inclination angle of the wire electrode from the tension control gain storage unit and sets the read tension control gain. And the controller controls the tension of the wire electrode using the set tension control gain.

The control gain may be stored in the tension control gain storage unit in association with any one of a diameter of the wire electrode, a material of the wire electrode, a material of the upper and lower wire guides, or a combination thereof, and the inclination angle of the wire electrode.

The inclination angle obtaining unit may obtain the inclination angle of the wire electrode when a relative position of the upper and lower wire guides is changed, when the inclination angle of the wire electrode is changed, at each of predetermined times, or at predetermined time intervals, and the tension control gain setting unit reads the tension control gain corresponding to the obtained inclination angle of the wire electrode from the tension control gain storage unit and sets the tension control gain.

The present invention, which includes the above-mentioned configuration, can provide a wire electric discharge machine having a wire electrode tension control function for preventing the wire electrode from oscillating in taper machining.

BRIEF DESCRIPTION OF THE DRAWINGS

The forgoing and other objects and feature of the invention will be apparent from the following description of preferred embodiments of the invention with reference to the accompanying drawings, in which:

FIG. 1 is a diagram of the configuration of a wire electric discharge machine according to an embodiment of the present invention;
FIG. 2 is a diagram of a first example of the contents (parameter) stored in a tension control gain storage unit;
FIG. 3 is a diagram of the second example of the contents (parameter) stored in a tension control gain storage unit;
FIG. 4 is a diagram of a third example of the contents (parameter) stored in the tension control gain storage unit; and
FIG. 5 is a flowchart of a process for controlling the tension of the wire electrode performed with the wire electric discharge machine according to the present invention.

DETAILED DESCRIPTION OF THE PREFERRED EMBODIMENTS

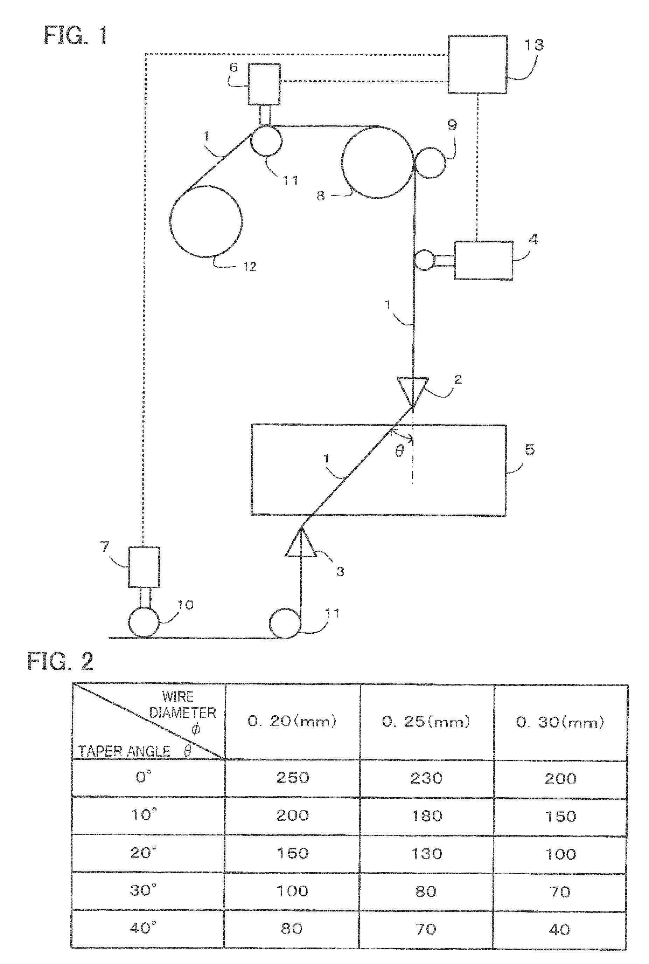

The configuration of a wire electric discharge machine according to an embodiment of the present invention will be described with reference to FIG. 1.

The wire electric discharge machine includes a controller 13 configured to control the driving of, for example, the motor in each component. A wire electrode 1 is wound around a wire bobbin 12. The wire bobbin 12 is pulled and rotated while the wire electrode 1 is delivered. An appropriate resistance is applied to the wire bobbin 12 by means of a torque motor or friction break (not illustrated). This prevents the wire electrode 1 from sagging due to excessive rotation of the wire bobbin 12. The "appropriate resistance" to be applied to the wire electrode 1 includes a resistance electrically controlled by the torque motor or the resistance mechanically applied by the friction brake.

The wire electrode 1 reaches a feed roller 8 through a guide roller 11 driven by a feed motor (first motor) 6. The wire electrode 1 delivered through the feed roller 8 and a pinch roller 9 reaches the delivery roller 10 driven by a delivery motor (second motor) 7 through an upper wire guide 2, a workpiece 5, a lower wire guide 3, and a guide roller 11. Then, the wire electrode 1 is recovered in a wasted wire electrode collection box (not illustrated). A tension detection device 4 is a detection unit configured to detect the tension of the wire electrode 1 moving in a region in which wire electric discharge machining is performed in order to control the tension of the moving wire electrode 1 at a constant value.

Controlling the speed or torque of the feed motor (first motor) 6 driving the guide roller 11 and the delivery roller 10 driven by the delivery motor (second motor) 7 gives a predetermined magnitude of tension appropriate for machining to the wire electrode 1 in the machining region (between the upper wire guide 2 and the lower wire guide 3). Wire electric discharge machining is performed on the workpiece 5 while the speed of each of the feed motor (first motor) 6 and the delivery motor (second motor) 7 is controlled such that the tension of the wire electrode 1 detected by the tension detection device 4 becomes a set value. In the present embodiment, the rotational speed of the delivery motor (second motor) 7 is controlled to be constant, and the rotational speed of the feed motor (first motor) 6 is controlled such that the tension detected in the tension detection device 4 becomes a set value.

The upper wire guide 2 and the lower wire guide 3 are driven by a driving unit (not illustrated) and relatively move in two directions horizontal to the workpiece 5 (an X axis direction and a Y axis direction). The upper wire guide 2 can also move in a U axis direction parallel to the X shaft and in a V axis direction parallel to the Y shaft so as to move relative to the lower wire guide 3. This enables taper machining of the workpiece 5 to be performed. A feeder element (not illustrated) touches the wire electrode 1 such that a pulsed voltage is applied from a power supply unit (not illustrated). The pulsed voltage generates electric discharge between the wire electrode 1 and the workpiece 5 and wire electric discharge machining is performed on the workpiece 5. The above-mentioned configuration is included in a well-known wire electric discharge machine.

In the wire electric discharge machine described above, the way the wire electrode 1 touches the upper and lower wire guides 2 and 3 and the strength with which the wire electrode 1 touches the upper and lower wire guides 2 and 3 differ dependent upon the magnitude of a taper angle θ. Therefore, the value of the control gain of the tension of the wire electrode 1 is changed according to the taper angle θ. Herein, "the control gain of the tension of the wire electrode 1" is a weight coefficient in a feedback control which is used to determine the input current value (namely, the input current value to the feed motor or the deliver motor for adjusting the tension value of the wire electrode) by feeding back the difference between a target tension value and the actual tension value of the wire electrode 1 to the controller.

When a taper machining is performed while moving movable axes that can move the positions of the upper and lower wire guides 2 and 3 (for example, a U axis and V axis that move the upper wire guide 2 in the U axis direction and V axis directions), if the taper angle θ exceeds a given value, the controller 13 lowers the control gain of the tension of the wire electrode 1 so as to prevent the wire electrode 1 from oscillating. The upper and lower wire guides 2 and 3 determine the position of the wire electrode.

Specific examples of the control in which the reduction in the control gain of the tension of the wire electrode 1 prevents the wire electrode 1 from oscillating will be described below.

<Example 1>

(1) When a taper machining in which the upper and lower wire guides 2 and 3 are moved is not performed, or when the taper angle θ is less than a predetermined value, during wire electric discharge machining, the control gain of the tension of the wire electrode 1 is not changed because the wire electrode 1 does not oscillate.

(2) When the taper angle θ between the upper wire guide 2 and the lower wire guide 3 exceeds a given value, the way the wire electrode 1 touches the upper and lower wire guides 2 and 3 changes and the strength with which the wire electrode 1 touches the upper and lower wire guides 2 and 3 increases. Thus, the control gain of the tension of the wire electrode 1 is lowered to prevent the wire electrode 1 from oscillating.

(3) When the taper angle θ between the upper wire guide 2 and the lower wire guide 3 is less than a given value, the way the wire electrode 1 touches the upper and lower wire guides 2 and 3 changes and the strength with which the wire electrode 1 touches the upper and lower wire guides 2 and 3 decreases. Thus, the control gain of the tension of the wire electrode 1 is increased.

(4) The control gain of the tension of the wire electrode 1 responsive to the increase or decrease in the taper angle θ between the upper wire guide 2 and the lower wire guide 3 is used.

The control gains of the wire tension used when performing a taper machining, which are determined in advance according to the diameter of the wire electrode 1, the material of the wire electrode 1, the material of the upper and lower wire guides 2 and 3, and the taper angle θ, are stored in advance as parameters in a memory (not illustrated) in the controller 13. A control gain having an appropriate value adapted for the machining conditions is invoked from the memory and is used for the control of the wire tension when performing a taper machining.

In the above-mentioned examples, the control gain of the tension of the wire electrode 1 is adjusted according to the taper angle θ. The way the wire electrode 1 touches the upper and lower wire guides 2 and 3 when performing a taper machining varies depending on the conditions, such as the diameter of the wire electrode 1, the material of the wire electrode 1, and the material of the upper and lower wire guides 2 and 3. Thus, it is necessary to use the control gain of the tension of the wire electrode 1 that has a value appropriate for these conditions. Accordingly, the control gain of the tension of the wire electrode 1 in a taper machining is determined in consideration of the diameter of the wire electrode 1, the material of the wire electrode 1, the material of the upper and lower wire guides 2 and 3, and so on, in addition to the taper angle θ.

Specific examples of the determination of the control gain of the tension of the wire electrode 1 in taper machining will described below. In the examples, the control gain is determined in consideration of the diameter of the wire electrode, the material of the wire electrode, the materials of the upper and lower wire guides, and so on, in addition to the taper angle θ.

<1> When the taper angle θ is increased and a wire electrode 1 having a diameter larger than that of a reference wire is used, the wire electrode 1 easily oscillates. Thus, the control gain of the tension of the wire electrode 1 is lowered. On the other hand, when a wire electrode 1 having a diameter smaller than that of a reference wire is used, the wire electrode does not oscillate easily. Thus, the control gain of the tension of the wire electrode 1 is increased.

<2> When the taper angle θ is increased and a material softer than that of a reference wire is used as the wire electrode 1, the wire electrode 1 easily oscillates. Thus, the control gain of the tension of the wire electrode 1 is lowered. On the other hand, when a material harder than that of a reference wire is used as the wire electrode 1, the wire electrode 1 does not oscillate easily. Thus, the control gain of the tension of the wire electrode 1 is increased.

<3> When the taper angle θ is increased and the material of the upper and lower wire guides 2 and 3 is changed (for example, changed from single crystal diamond to polycrystalline diamond), the control gain of the tension of the wire electrode 1 is increased or lowered depending on the material. This is because the upper and lower wire guides 2 and 3 made of polycrystalline material have a particular angle at which the wire guides easily oscillate. When the upper and lower wire guides 2 and 3 made of the material that easily oscillates are used, the control gain is lowered. When the upper and lower wire guides 2 and 3 made of the material that does not easily oscillate are used, the control gain is increased.

The control gains of the wire electrode 1 in the examples <1> to <3>, which are determined in advance by experiments according to the diameter of the wire electrode 1, the material of the wire electrode 1, the material of the upper and lower wire guides 2 and 3, and the taper angle θ, are stored in advance as parameters in a storage unit such as a memory device. A parameter (the tension control gain) according to the diameter of the wire electrode 1, the material of the wire electrode 1, the material of the upper and lower wire guides 2 and 3, and the taper angle θ is automatically invoked and used when performing machining of a workpiece 5.

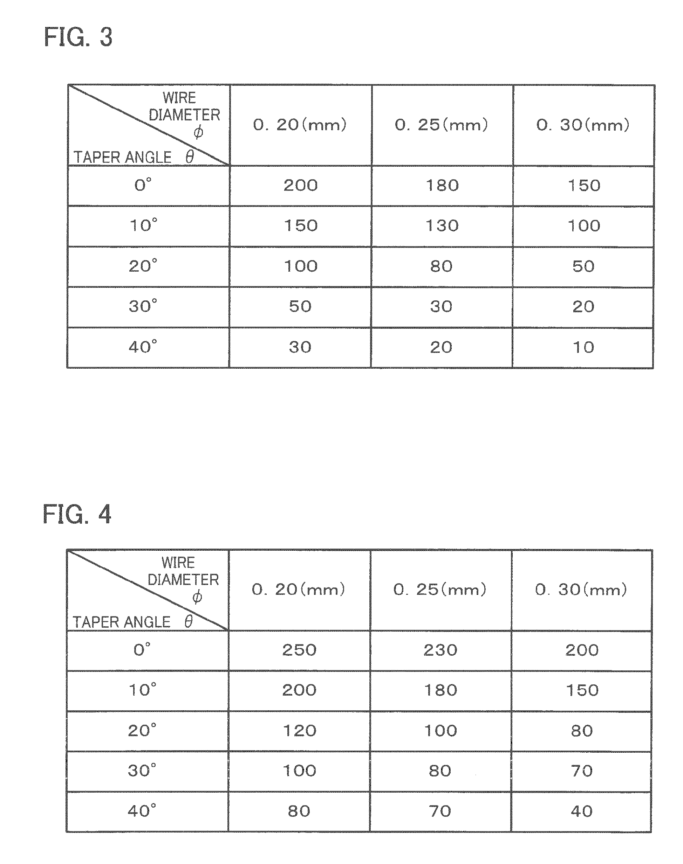

FIGS. 2 to 4 illustrate specific examples of the parameters stored in the storage unit. FIG. 2 is an example in which the material of the upper and lower wire guides 2 and 3 is single crystal diamond and the wire electrode 1 is a reference wire of which material is brass. FIG. 3 is an example in which the material of the upper and lower wire guides 2 and 3 is single crystal diamond and the wire electrode 1 is a soft wire of which material is brass. FIG. 4 is an example in which the material of the upper and lower wire guides 2 and 3 is polycrystalline diamond and the wire electrode 1 is a reference wire of which material is brass. Note that the example in FIG. 4 shows that the previously stored data of the control gain is further adjusted in a exploratory experiments when the wire electrode 1 most easily oscillates at the taper angle θ of 20°. The taper angle at which the wire electrode 1 most easily oscillates is confirmed in a exploratory experiments when the material of the upper and lower wire guides 2 and 3 has been changed to polycrystalline diamond.

The value of the control gain is invoked when the relative position of the upper and lower wire guides 2 and 3 is changed, when the diameter of the wire electrode 1 is changed, when the material of the wire electrode 1 is changed, and when the material of the upper and lower wire guides 2 and 3 is changed. The value of the control gain may be invoked at predetermined times or at predetermined time intervals.

When a wire electrode 1 that has a diameter larger than a reference diameter of the wire electrode 1 is used, the wire electrode 1 oscillates more easily than a wire electrode 1 having the reference diameter. Thus, the control gain having a value smaller than the value of the control gain of the wire electrode having the reference diameter is invoked. On the other hand, when a wire electrode that has a diameter smaller than a reference diameter of the wire electrode is used, the wire electrode does not oscillate easily as compared with the a wire electrode having the reference diameter. Thus, the control gain having a value larger than the value of the control gain of the wire electrode having the reference diameter is invoked.

When a wire electrode 1 that is softer than the wire electrode made of a reference material is used, the wire electrode 1 oscillates more easily than the wire electrode made of the reference material. Thus, the control gain having a value smaller than the value of the control gain of the wire electrode made of the reference material is invoked. On the other hand, when the wire electrode 1 that is harder than the wire electrode 1 made of a reference material is used, the wire electrode 1 does not oscillate easily as compared with the wire electrode made of the reference material. Thus, the control gain having a value larger than the value of the control gain of the wire electrode made of the reference material is invoked.

The methods for inclining the wire electrode 1 include a method in which an inclination angle is directly instructed according to a machining program, a method in which the movement of the U axis or the V axis is instructed according to a machining program, and a method in which the U axis and/or V axis are manually moved prior to the start of the machining. The wire electrode 1 may be inclined using any of the methods when the control gain is changed.

The inclination angle of the wire electrode 1 is calculated when the inclination angle is changed, for example, when the U axis and/or V axis are moved and the relative position of the upper and lower wire guides is changed. The inclination angle of the wire electrode 1 may be calculated at predetermined times or at predetermined time intervals.

The inclination angle of the wire electrode 1 is calculated in the following method. The coordinates of the U axis and V axis of the upper and lower wire guides 2 and 3 when the wire electrode 1 is in a vertical position are stored in advance. When the upper and lower wire guides 2 and 3 move, the relative angle of the upper and lower wire guides 2 and 3 is calculated from the relative coordinates of the upper and lower wire guides 2 and 3, shifted from the coordinates of the upper and lower wire guides 2 and 3 that are in vertical position, and from the coordinates on a Z axis are calculated. The relative angle of the upper and lower wire guides 2 and 3 is the same as the inclination angle (taper angle) θ of the wire electrode 1 because the wire electrode 1 passes through the upper and lower wire guides 2 and 3. Therefore, the relative angle of the upper and lower wire guides 2 and 3 directly corresponds to the inclination angle of the wire electrode 1.

The inclination angle (taper angle) θ of the wire electrode 1 is calculated in the following method.

On the assumption that the coordinates of the position at which the wire electrode 1 touches the upper wire guide 2 are (Ux, Uy, and Uz) and the coordinates of the position at which the wire electrode 1 touches the lower wire guide 3 are (Lx, Ly, and Lz), the inclination angle (taper angle) θ of the wire electrode 1 is calculated from the following expression (1).

$$\theta = Tan^{-1}\left( \frac{\sqrt{\left(U_x - L_x\right)^2 + \left(U_y - L_y\right)^2}}{\left|U_z - L_z\right|} \right) \qquad \cdots\cdots(1)$$

Note that, as described above, control of the tension of the wire electrode 1 is performed by a motor that feeds the wire electrode 1 to the workpiece 5 and a motor that delivers the wire electrode 1 from the workpiece 5. In many cases, control of the tension of the wire electrode 1 is performed by applying a back tension to the wire electrode 1 with a motor (the feed motor (first motor) 6) and feeding the wire electrode 1 with the other motor (the delivery motor (second motor) 7).

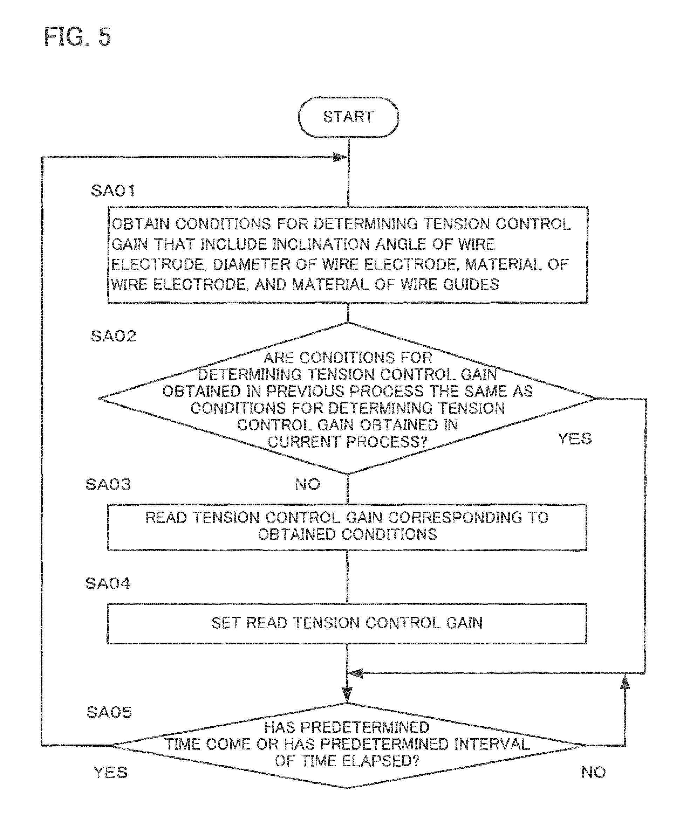

FIG. 5 is a flowchart describing a process for controlling the tension of a wire electrode according to the present invention. Hereinafter, the process will be described according to each step.

[Step SA01]

The conditions for determining the tension control gain are obtained. The conditions include the inclination angle of the wire electrode, the diameter of the wire electrode, the material of the wire electrode, and the material of the wire guides.

[Step SA02]

It is determined whether the conditions for determining the tension control gain that have been obtained in the previous process is the same as the conditions that have been obtained in the current process (step SA01). When the conditions are the same (YES), the process proceeds to step SA05. When the conditions are not the same (NO), the process proceeds to step SA03.

[Step SA03]

The tension control gain according to the obtained conditions is read.

[Step SA04]

The tension control gain read in step SA03 is set.

[Step SA05]

It is determined whether a predetermined time has come or a predetermined interval has elapsed. When the predetermined time has come, or when the predetermined interval has elapsed (YES), the process returns to step SA01.

The flowchart in FIG. 5 will be additionally described. the inclination angle (taper angle) θ of the wire electrode 1 may be obtained by reading the inclination angle directly instructed in the machining program or by the calculation based on the positions of the upper and lower wire guides 2 and 3. The other parameters can also be directly instructed in the machining program or can be read from the data set in the memory in the controller 13.

Note that parameters of the control gain used for controlling the tension may be stored in a memory of the controller 13 in advance in association with a taper angle $\theta$, and a control parameter may be read from the memory based on the taper angle $\theta$ with which machining is being performed.

**Claims**

1. A wire electric discharge machine having a wire electrode tension control function, the wire electric discharge machine comprising:

   a motor that feeds a wire electrode to a workpiece;
   a tension detection unit that detects a tension of the wire electrode;
   a controller that controls the tension of the wire electrode;
   upper and lower wire guides that hold the wire electrode above and below the workpiece; and
   upper and lower wire guide units that move the upper and lower wire guides to incline the wire electrode; wherein
   the wire electric discharge machine performs machining of the workpiece by inclining the wire electrode and relatively moving the workpiece and the wire electrode, and
   the wire electric discharge machine further comprising:

      a tension control gain storage unit that stores control gains of the tension of the wire electrode in association with inclination angles of the wire electrode;
      an inclination angle obtaining unit that obtains the inclination angle of the wire electrode; and
      a tension control gain setting unit that reads the tension control gain corresponding to the obtained inclination angle of the wire electrode from the tension control gain storage unit and sets the read tension control gain; wherein
      the controller controls the tension of the wire electrode using the set tension control gain.

2. The wire electric discharge machine having a wire electrode tension control function according to claim 1, wherein the control gain is stored in the tension control gain storage unit in association with any one of a diameter of the wire electrode, a material of the wire electrode, a material of the upper and lower wire guides, or a combination thereof, and the inclination angle of the wire electrode.

3. The wire electric discharge machine according to claim 1 or 2, wherein
   the inclination angle obtaining unit obtains the inclination angle of the wire electrode when a relative position of the upper and lower wire guides is changed, when the inclination angle of the wire electrode is changed, at each of predetermined times, or at predetermined time intervals, and
   the tension control gain setting unit reads the tension control gain corresponding to the obtained inclination angle of the wire electrode from the tension control gain storage unit and sets the tension control gain.

FIG. 1

FIG. 2

| WIRE DIAMETER $\phi$ / TAPER ANGLE $\theta$ | 0.20(mm) | 0.25(mm) | 0.30(mm) |
|---|---|---|---|
| 0° | 250 | 230 | 200 |
| 10° | 200 | 180 | 150 |
| 20° | 150 | 130 | 100 |
| 30° | 100 | 80 | 70 |
| 40° | 80 | 70 | 40 |

FIG. 3

| WIRE DIAMETER φ ⟍ TAPER ANGLE θ | 0. 20(mm) | 0. 25(mm) | 0. 30(mm) |
|---|---|---|---|
| 0° | 200 | 180 | 150 |
| 10° | 150 | 130 | 100 |
| 20° | 100 | 80 | 50 |
| 30° | 50 | 30 | 20 |
| 40° | 30 | 20 | 10 |

FIG. 4

| WIRE DIAMETER φ ⟍ TAPER ANGLE θ | 0. 20(mm) | 0. 25(mm) | 0. 30(mm) |
|---|---|---|---|
| 0° | 250 | 230 | 200 |
| 10° | 200 | 180 | 150 |
| 20° | 120 | 100 | 80 |
| 30° | 100 | 80 | 70 |
| 40° | 80 | 70 | 40 |

FIG. 5

```
                              ┌──────────┐
                              │  START   │
                              └────┬─────┘
                                   │
       ┌───────────────────────────┤
       │                           ▼
    SA01
       │   ┌──────────────────────────────────────────────────────┐
       │   │ OBTAIN CONDITIONS FOR DETERMINING TENSION CONTROL      │
       │   │ GAIN THAT INCLUDE INCLINATION ANGLE OF WIRE            │
       │   │ ELECTRODE, DIAMETER OF WIRE ELECTRODE, MATERIAL OF     │
       │   │ WIRE ELECTRODE, AND MATERIAL OF WIRE GUIDES            │
       │   └──────────────────────────────────────────────────────┘
       │                           │
    SA02                           ▼
       │              ARE CONDITIONS FOR
       │         DETERMINING TENSION CONTROL GAIN
       │      OBTAINED IN PREVIOUS PROCESS THE SAME AS
       │         CONDITIONS FOR DETERMINING TENSION
       │            CONTROL GAIN OBTAINED IN              YES
       │               CURRENT PROCESS?
       │                           │
    SA03                          NO
       │   ┌──────────────────────────────────────────────────────┐
       │   │   READ TENSION CONTROL GAIN CORRESPONDING TO          │
       │   │             OBTAINED CONDITIONS                        │
       │   └──────────────────────────────────────────────────────┘
       │                           │
    SA04                           ▼
       │   ┌──────────────────────────────────────────────────────┐
       │   │        SET READ TENSION CONTROL GAIN                   │
       │   └──────────────────────────────────────────────────────┘
       │                           │
    SA05                           ▼
       │              HAS PREDETERMINED
       │      TIME COME OR HAS PREDETERMINED INTERVAL
     YES              OF TIME ELAPSED?                    NO
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5312657 A
- JP 10309631 A
- JP 11254240 A